# Europäisches Patentamt

# European Patent Office

# Office européen des brevets

(11) Publication number: **0 140 686**
**B1**

(12)

# EUROPEAN PATENT SPECIFICATION

(45) Date of publication of patent specification: **06.09.89**

(51) Int. Cl.⁴: **B 65 D 41/18**

(21) Application number: **84307395.8**

(22) Date of filing: **26.10.84**

(54) Resealable container closure.

(30) Priority: **31.10.83 US 547424**
**04.10.84 US 657624**

(43) Date of publication of application:
**08.05.85 Bulletin 85/19**

(45) Publication of the grant of the patent:
**06.09.89 Bulletin 89/36**

(84) Designated Contracting States:
**AT BE CH DE FR GB IT LI LU NL SE**

(56) References cited:
**EP-A-0 044 112**
**EP-A-0 048 472**
**FR-A-1 149 455**
**FR-A-1 370 442**
**FR-A-1 558 212**
**US-A-2 214 422**

(73) Proprietor: **REYNOLDS METALS COMPANY**
**6601 West Broad Street**
**Richmond, VA 23261 (US)**

(72) Inventor: **Taylor, Robert Lee**
**3810 West Street**
**Chester Virginia 23831 (US)**
Inventor: **Sink, Danny Ricks**
**4632 Selwood Road**
**Richmond Virginia 2324 (US)**
Inventor: **Cudzik, Daniel Frank**
**1714 Yarmouth Circle**
**Richmond Virginia, 23225 (US)**

(74) Representative: **Bass, John Henton et al**
**REDDIE & GROSE 16 Theobalds Road**
**London WC1X 8PL (GB)**

Courier Press, Leamington Spa, England.

# Description

## Background of the invention

The present invention relates to a resealable closure device for containers, which may be employed, for example, on metallic cans whether the contents of the container are packaged under a vacuum, are at atmospheric pressure or, more particularly, are internally pressurised.

Numerous closures for container bodies, such as metallic cans, glass or plastic bottles or jars and the like are known. For bottles or jars, resealable closures, in the form of metallic screw-on caps or tops, are commonplace. For metallic cans that contain beverages, such as beer and soft drinks, however, no commercially successful resealable closure is known. The commercially employed closure elements for can bodies include the ring-pull or "pop top" can end and the non-detachable or "stay-on-tab" can end.

In the case of metallic cans, the inability to provide a practical resealable closure device has limited, at least in the case of beverage cans, the size of the container. Thus, while plastic and glass bottles having a capacity as high as two liters have become commercially successful, metallic beverage cans have been limited, for the most part, to single serving sizes, having a maximum capacity of about 16 ounces (0.473 liters).

Closure devices for containers are known which comprise: a container end wall having an opening therethrough surrounded by an upstanding flange; and a flexible closure element having a central panel and a lever portion connected to said central panel by a connecting portion, said lever portion having in vertical cross-section a nose at its junction with said connecting portion and being initially disposed in a first position as a frustoconical skirt which, when the closure element is positioned over the opening, is directed in a general sense away from the container, such that, upon moving said lever portion to a second position in which it extends in a generally opposite sense to the first position, said nose will engage an annular part of the exterior surface of said flange to retain the closure element sealingly over said opening, with said lever portion engaging a generally frustoconical annular portion of said end wall surrounding said opening.

Such a closure device is shown in EP-A-44 112 and relies upon plug contact between an inner wall of the container opening and the closure element for sealing, with the seal continuing against the mouth at the top of the container. A plurality of spaced locking noses hook under a bulge at the mouth of the container to close the container. Such a closure cannot seal on the outer periphery of the container, due to the presence of the spaced noses. Further, the inner surface seal eliminates any chance of controlled venting, thereby allowing occurrence of the blow off problem described below.

FR-A-1 370 442 discloses a closure device for a container comprising an end wall having an opening surrounded by an outwardly flaring lip, and a flexible closure element having a central panel and a peripheral flange terminating in an outwardly extending skirt. The skirt sealingly engages the exterior surface of the lip and fits into the bend between the lip and the end wall. In this disclosure the closure element is elastically stretchable and is applied by pressure resulting in radial dilation.

GB-A-2 091 706 discloses a flexible closure element for a container having an external bead about its mouth. The closure device has a skirt or lever portion which can be moved from an upwardly extending to a downwardly extending position where a bead formed on an internal surface of the portion connecting the plane surface of the element and the skirt or lever portion engages a sloping surface of the container mouth bead. In the lowered position, the skirt extends at an angle away from the container wall and makes no contact therewith. Also, with the skirt extending upwardly, the closure element cannot be snugly seated on the container wall.

With the closure device of this reference the sealing connection between the bead of the closure element and that of the container mouth is left exposed to dirt and other debris which may be encountered in using the container. The exposed location of the skirt also facilitates accidental premature opening of the container during shipping and storage and does not permit close packing of the containers. In addition, in the event the contents of the container are pressurised, the contact between the bead of the closure element and the mouth bead would be insufficient to prevent blow off of the closure device. One reason for this is that the slope of the surface of the mouth bead is insufficient. Another reason is that the upward bulging of the top of the closure tends to rotate the skirt further downwardly about the mouth bead and, since the skirt is not restrained from such movement, leverage is placed on the relatively small area of the closure element bead in contact with the mouth bead, tending to deform the closure element bead. Further, it would be difficult to control venting of the contents of the container with such a closure device in the event that the contents were pressurised.

FR-A-2 377 333 illustrates a closure device for glass bottles in which, an over-centre tightening element is attached to an end wall portion of the closure. When in its closed position, the tightening element pulls the end wall against the mouth of the bottle, with sealing occurring only at the top surface of the bottle.

Problems with this closure come from the location of the seal. Internal pressure acting against the end wall of the closure may lift the end wall from the mouth of the bottle, possibly causing leakage of pressure and/or the product from the container. Additionally, with sealing on the end of the bottle mouth alone, no provision is made for controlled venting of internal pressure when opening the bottle using this closure device. Thus, when returned to its loosened position, internal pressure within the bottle will tend to blow the closure off of the bottle uncontrollably, a result which is unacceptably dangerous for the consumer.

Another over-centre closure device is described in US-A-4 376 493 for use with a large diameter can, such as a paint can, and includes a cover which locks onto the can. There are problems involved with this closure which · make it unacceptable for pressurised cans.

The can body has a downwardly directed flange and the cover hooks under the lip of the flange. This has been found to be unacceptable for several reasons. The resilient materials used to form such closures tend, over time, to permanently deform or "creep". This deformation makes it difficult to remove the closure of this patent from the can and may cause damage to the flange of the can or the sealing surface of the closure during removal. This makes resealing of the container difficult.

Another problem with this structure lies in the region of sealing between the closure and the can. It is preferred that sealing also occur between a well or wall of the closure and the inner side wall of the container. The seal continues around the flange and may continue under it, unless spaced locking members are employed. Such a seal will not controllably vent internal pressure within the can when opened, again creating the possibility that the internal pressure will blow the closure element off of the container when the closure is returned to the unlocked position.

An additional problem caused by the presence of a central plug member, especially in pressurised cans, is the tendency of the internal pressure to push the plug upwardly, resulting in additional stresses on the locking mechanism and possibly destroying the central seal.

It is thus a primary objective of the present invention to provide an over-centre closure device which overcomes the shortcomings of the known devices of this type.

It is thus a further objective of the present invention to provide a resealable closure device for metallic can bodies which will enable metallic cans to serve the large capacity beverage container market.

The present invention

According to the present invention, a closure device of the type disclosed by EP-A-44 112 is characterised in that said flange flares outwardly relative to said opening, and said nose extends continuously round said element and seals the container by engagement with the exterior surface of said flange, said closure element being out of contact with a sufficient portion of the inner surface of said flange to prevent said element forming a plug that seals against said inner surface.

In one preferred embodiment of the invention the nose does not hook under the edge of the flange, but is tightly held thereagainst by tension within the closure element, as well as by the internal pressure within the can body, when so filled. Hooking in the context of this invention means, for example, locating a portion of the closure element underneath the lip of the flange. Such hooking has been found to involve the risk of damaging the closure element and/or distorting the lip of the flange, when the closure element is removed from the flange lip. A sealing region which extends from a line around the outer flange surface to a tangent line between the central panel of the closure device and the flange provides a leak-proof seal when closed and permits controlled venting of internal pressure within the can when released without blowing the closure element off the end.

Brief description of the drawings

The closure device of the present invention will be more fully described with reference to the Figures in which:

FIGURE 1 is a cross-sectional view of the closure device of the present invention just prior to mating of the metallic end and the flexible closure element;

FIGURE 2 is a cross-sectional view of the closure device of the present invention after placing the flexible closure element onto the metallic end;

FIGURE 3 is a cross-sectional view of the closure device of the present invention partially through the closing process;

FIGURE 4 is a cross-sectional view of the closure device of the present invention in the fully closed position;

FIGURE 5 is a cross-sectional view of the closure device of the present invention in the fully closed position, including a modified metallic end;

FIGURE 6 is a cross-sectional view illustrating the closure device of the present invention on an internally pressurized can body;

FIGURE 7 is an expanded cross-sectional view of the flange region of FIGURE 6, illustrating the sealing region of the closure device of the present invention;

FIGURE 8 is a cross-sectional view of the closure device of the present invention mounted on an unpressurized can;

FIGURE 9 is a cross-sectional view of a stack of closure devices according to the present invention;

FIGURE 10 is a sectional view in elevation of another embodiment of the present invention;

FIGURE 11 is an enlarged detailed view of the flange of the embodiment of FIGURE 10; and

FIGURE 12 is a top plan view of the embodiment of FIGURE 10.

Detailed description of the preferred embodiments

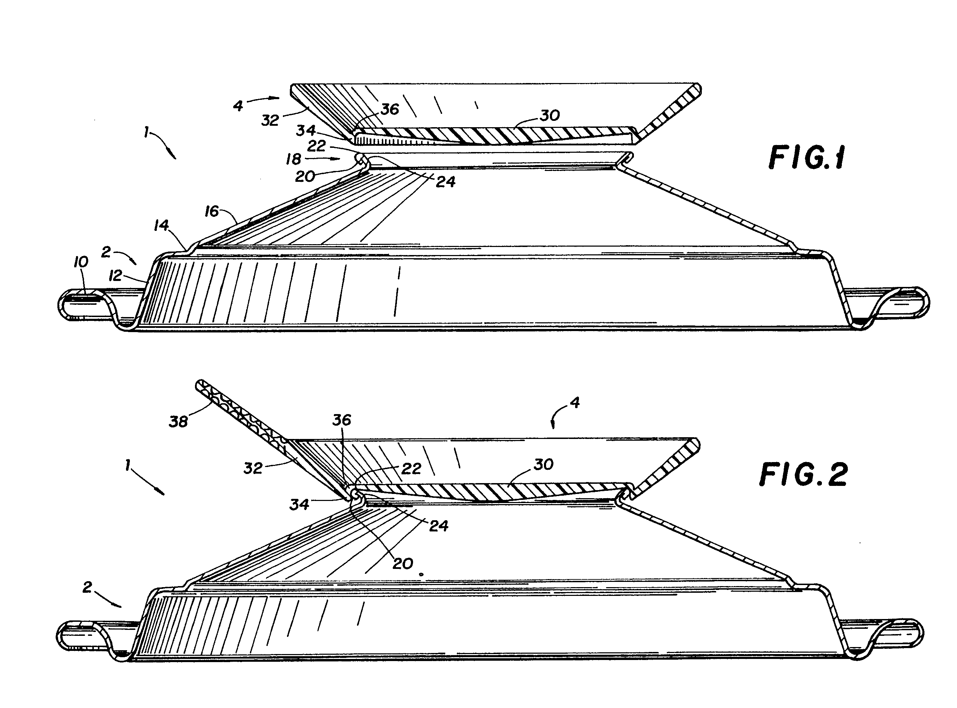

Turning now to the FIGURES, and particularly to FIGURES 1 through 4, the closure device 1 of the present invention is illustrated. The closure device 1 is in two parts: a metallic end 2 and a flexible closure element 4. The metallic end 2 preferably includes a curl 10, to enable the closure device 1 to be double seamed to a can body, as is practically standard in the industry. If desired, however, curl 10 could be eliminated, in such situations as where it is desired to adhesively bond the closure device 1 to the can body. A first inner panel wall 12 and second inner panel wall 16 give height and column strength to the end 2. The elevated conical height provided by panels 12 and 16 helps improve pouring characteristics of containers having the closure device 1 thereon. A stacking bead 14 provides for stable vertical stacking of filled cans with closure 1 thereon.

The metallic end 2 is open at its center, with a flange region 18 being formed at its central opening. The flange region 18 is upwardly and outwardly-directed with relation to the opening in the end 2 and includes an outer flange surface 20, a top flange surface 22 and an inner flange surface 24. As illustrated in FIGURES 1 through 4, the flange 18 is formed by beading or hemming metal of end 2 outwardly. As will be described below, this is not an absolute requirement; alternatively, the flange 18 may be formed by inward beading.

In one embodiment, the closure element 4 includes a central closing wall or panel 30 and a generally frustoconical lever member or skirt 32. Central panel 30 may be formed having a tapering reduced thickness from its center to its outer edges, adding strength to the closure element 4. However, this panel 30 is preferably formed having predominantly a single thickness as described in another embodiment. The lever member 32 may be of increased thickness from its connection to the central wall 30 to its outer edge. However, it may take other forms, such as by having a generally circular thickened ring at the outer edge thereof, or by having a constant thickness along its length, as will be described in another embodiment. Lever member 32 is connected to central wall 30 by means of a transitional region 36 and a nose portion 34 is formed at the inner end of the lever 32. It is preferred that the nose 34 be at a diameter approximately equal to or slightly larger than the outer diameter of the flange 18. It is possible, however, to permit the diameter of the nose 34 to be slightly less than that of the flange 18, providing an interference fit in this case, for high-speed application of the closure element 4 to the end 2.

It has been found that improved sealing of the closure element 4 to the metallic end 2 may occur if the closure element 4 and/or the metallic end 2 is heated, such as to a temperature of between about 95 and 120°F as these components are assembled.

Permissible materials for the metallic end 2 include those materials typically used in can making, such as steel and aluminum alloys, with preference being made to aluminum. The flexible closure element 4 may be formed of rubber or a plastics resin, such as polypropylene, polyethylene, and the like. Polypropylene is preferred.

To improve compatibility between the sealing surfaces of metallic end 2 and closure element 4, a surface coating material may be placed on the sealing surfaces of metallic end 2 and/or closure element 4. Typical of such materials are waxes, lacquers and the like. If necessary to reduce the gas transmission rate of the closure element 4, this element 4 may be coated with a low gas transmission rate material, such as polyvinyldene chloride (PVDC) or ethylene vinyl alcohol (EVOH).

In FIGURE 2, the closure element 4 has been positioned onto the metallic end 2, but closing of the closure element 4 has not yet begun. As can be seen in this FIGURE, the transitional zone 36 of the closure element 4 is in contact with the top surface 22 and a rounded portion of the outer portion 20 of flange 18. Central panel 30 may also be in contact with the top wall 22 of the flange 18. However, the inner surface 24 of flange 18 is not in contact with the central panel 30, for reasons that will be more fully explained below. Thus, central panel 30 does not provide a plug for the central opening of the metallic end 2, but rather provides a cover therefor.

This FIGURE also illustrates the addition of a tab 38 connected at the outer end of lever 32. This tab 38, while optional, is preferred, in that tab 38 permits easier opening of the closure device 1 by providing an extension along a portion of lever 32 for a consumer to lift.

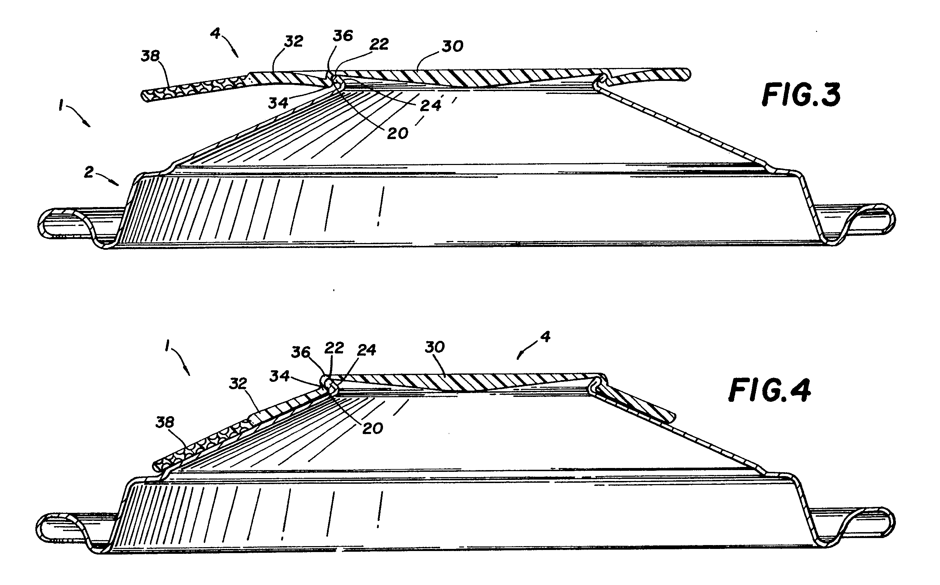

In FIGURE 3, the closure element 4 is in the process of being sealed onto flange 18 of metallic end 2. Nose 34 is approaching outer surface 20 of flange 18 while the transitional zone 36 remains in contact with flange 18 in the region previously mentioned. Central panel 30 remains out of contact with the inner surface 24 of flange 18.

Lever 32 has become bowed. This bowing comes from internal tension within the closure element 4. As previously shown, closure element 4 is molded in an upright or "reverse umbrella" position. As lever 32 is moved downwardly, such that closure element 4 becomes sealed onto metallic end 2, internal forces caused by the movement of lever 32 from its initially molded upright position through the horizontal and over-center and downwardly past the horizontal creates tension within lever 32, which tension acts to pull lever 32 and nose 34 closer to central panel 30, aiding in the sealing operation.

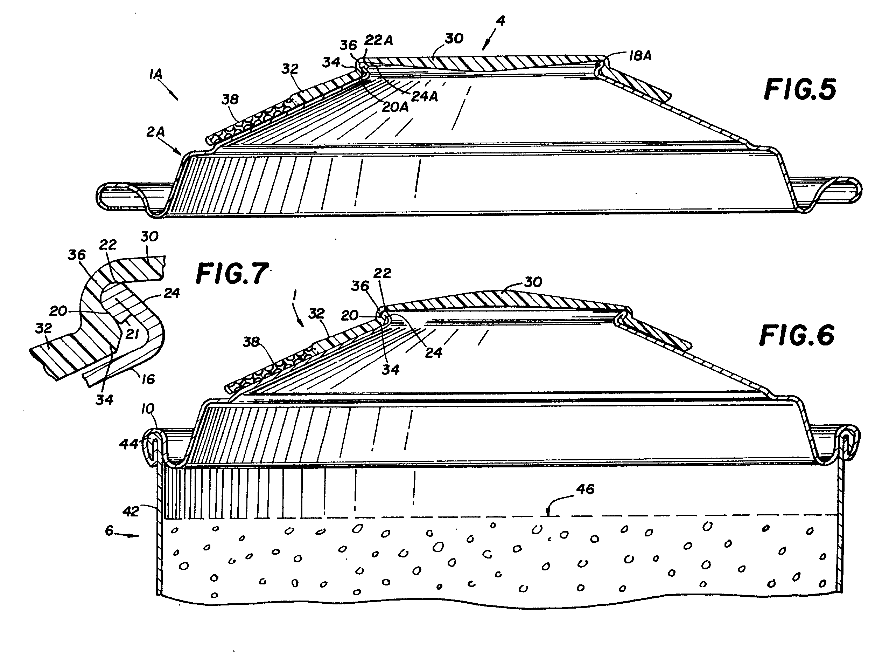

In FIGURE 4, closure device 4 has been fully sealed onto metallic end 2. Nose 34 is in sealing engagement with the outer surface 20 of flange 18. It should be noted that in this embodiment nose 34 does not extend completely under the edge 21 of the flange 18. When closure element 4 is on metallic end 2 for an extended period of time, natural plastic deformation will occur. Thus, in this embodiment, closure element 4 will tend to mold itself to the shape it is in. If nose 36 were positioned under edge 21, FIGURE 7, plastic flow into this region would occur, making it extremely difficult to remove the closure element 4 from the metallic end 2, with the added possibility of damage to the flange 18. Such plastic deformation, along with the potential damage to flange 18 upon removal of the closure element 4 from the metallic end 2, makes resealing of the closure element 4 onto the metallic end 2 difficult and unreliable.

In addition to the sealing of nose 34 to outer surface 20, transitional region 36 is in sealing engagement with the remainder of the outer surface 20 and a region up to the tangent line of central panel 30 with the top surface 22 of the flange 18. Again, central panel 30 is not in sealing engagement with the inner surface 24 of flange 18.

In the completely sealed position, there remains tension within lever 32. Lever 32, after passing the horizontal or over-center position, does not return to an untensioned position, as in its as-molded "reverse umbrella" position. This residual tension in lever 32 help maintain the tight seal between the nose 34 and the outer surface 20 of flange 18. This residual tension results, at least in part, from the inability of skirt 32 to rotate downwardly further, due to the firm contact against wall 16 of the outermost portion of skirt 32. It is theorized that, if lever 32 were unsupported, the closure element 4 would tend to creep off of end 2 when the closure device 1 is placed on a pressurized can.

FIGURE 5 illustrates the closed position of closure element 4 on a modified can end 2A. The modified end 2A has its flange region 18A beaded or hemmed inwardly, forming an outer surface 20A, a top surface 22A, and an inner surface 24A. In this modified closure device 1A, it is readily apparent that the nose 34 cannot hook under outer surface 20A, since there is no abrupt end to outer surface 20A, as this surface 20A is transitioned into wall 16.

Also, it should be again noted that transitional region 36 contacts the balance of outer surface 20A and a portion of the top surface 22A until the lower surface of central panel 30 becomes tangent with top surface 22A. There is, as in the previous embodiment, no sealing engagement between the central panel 30 and the inner surface 24A of flange 18A.

FIGURE 6 illustrates the sealing of closure device 1 onto a container body 6 having been filled with an internal pressure-generating material 46, such as a soft drink or beer. The sidewall 42 of can 6 includes a flange 44 which has now been double seamed to curl 10 in a conventional manner. The internal pressure within container 6 has caused central panel 30 to bulge outwardly slightly, with the tension caused by this internal pressure on central panel 30 causing added inwardly directed circumferential sealing between the nose 34 and the outer surface 20 of flange 18 and the transitional region 36 with its associated sealing regions 20 and 22. Thus, increased internal pressure within can 6 increases the seal of closure 1, rather than tending to cause seal failures, as in the prior-known closing structures.

FIGURE 7 is an exploded view of the flange region of FIGURE 6, more closely illustrating the sealing region between metallic end 2 and closure element 4 when positioned on a pressurized can 6. As can be seen in this FIGURE, nose 34 contacts a portion of outer surface 20 of the flange 18, but no portion of nose 34 is positioned under the end 21 of surface 20. Thus, there is no mechanical hook between metallic end 2 and closure element 4. The transitional zone 36 contacts the balance of outer surface 20 to a line on the top surface 22 of flange 18 where the central panel 30 becomes tangent to flange 18. Thus, no seal occurs between central panel 30 and inner surface 24 of flange 18.

The reason for this sealing arrangement becomes evident with an understanding of the opening of closure device 1 on internally pressurized can 6. Upon lifting of tab 38 or a portion of lever 32, nose 34 and transitional zone 36 separate from flange 18 in the area of tab 38 or area of lifting of lever 32. This separation occurs only for about one quarter of the circumference of flange 18. Further, it permits controlled venting or escape of the internal pressure within can 6. The remainder of lever 32 may then be moved back to its as-molded "inverted umbrella" position and the closure element 4 lifted from the metallic end 2.

If central panel 30 were permitted to be in sealing engagement with inner surface 24 of flange 18, such that central panel 30 formed a plug for the opening defined by flange 18, controlled venting would not occur by the lifting of tab 38 or a portion of lever 32. This would require that the entire lever 32 be returned to its upright position while internal pressure remained within the can 6, allowing the internal pressure within can 6 to blow off the closure element 4, which is not acceptable. It is thus important to confine the sealing area to the outer surface 20 of flange 18 and the top surface 22 of the flange 18 and avoid sealing along the plane inside surface 24 of flange 18.

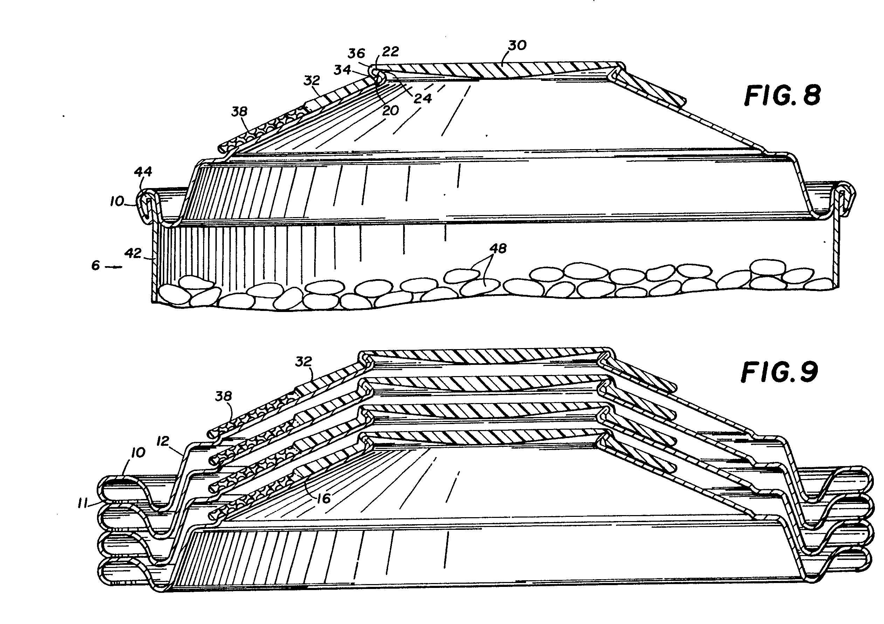

FIGURE 8 illustrates the use of the closure device 1 of the present invention to seal a can 6 which contains product which is not under internal pressure, such as water, peanuts 48 as shown, wine and the like.

While there may be no internal pressure within can 6, and thus the central panel 30 of closure element 4 is not outwardly deflected, such that no additional locking is added to the closure element 4, as previously mentioned, the tension within lever 32 provided by the inverting of the closure element 4 upon itself still provides a sufficient seal for the closure device 1. In that regard, it should be noted that the relative positioning of the various portions of closure element 4 in relation to metallic end 2 in this embodiment are identical to that shown in FIGURE 4, prior to the sealing of the closure device 1 onto a can body.

FIGURE 9 illustrates a plurality of closure devices 1 which are stacked upon each other. As can be readily seen, the only point of contact between adjacent closure devices 1 are at the outer edge 11 of the curl 10. There is no contact of the closure devices 1 between walls 16 and levers 32 or tabs 38 of adjacent closure devices 1.

Shuffling, or sideways displacement of a stack of ends, is controlled by the height of curl 10. The height of curl 10 is selected to permit stacking of closure devices 1 with only the edges 11 of curls 10 in contact. This height is selected to be greater than the vertical height of the flange 18 with closure element 2 fitted thereon.

The ability to stack the closure devices 1 is important. The closure devices 1 are shipped with the closure elements 4 sealed onto the metallic ends 2. The closure devices 1 are shipped in paper-wrapped stacks or sleeves, typically containing from about 200 to about 400 closure devices 1. These closure devices 1 are used by a canner, such as a soft drink canner or beer canner, in typical high-speed can line filling operations, filling in the order of 800 to 2000 cans per minute. Only slight modifications of the tooling of these canners is required to accept the closure device 1 of the present invention. This is in contrast to other suggested resealable closure designs for cans, which typically take the form of a cap or closure element closing only a small opening in the center of the can through which filling of the can must take place, thus significantly extending the time necessary to fill the can and requiring a slow down of operating speeds, to speeds such as those typically encountered in bottling operations.

Thus, when employing the closure device 1 of the present invention, canners may retain their investment in canning equipment, with only minor modifications or adjustments, rather than a complete replacement of their can filling line with bottle-type filling machinery.

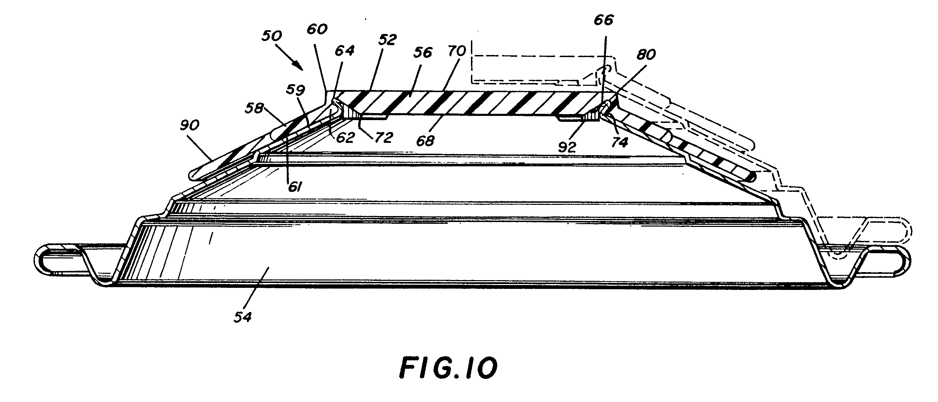

With reference now to FIGURES 10-12, another embodiment of the present invention is illustrated. As shown in FIGURE 10, the closure device 50 includes a flexible closure element 52 similar in structure to the flexible closure element of the previous embodiment, and a metallic end wall 54.

The flexible closure element 52 is preferably made of a relatively stiff nucleated polypropylene, such as that currently available from Eastman Kodak, and identified by that company as TENITE polypropylene, P7673-838A, a nucleated version of P7673-648G, one-half percent talc. The closure element 52 includes a central panel portion 56, a lever portion in the form of a skirt 58 and a transitional connecting portion 60 connecting the lever portion 58 with the central panel 56. In this embodiment, the lever portion 58 is of substantially uniform thickness. With this arrangement, when the closure element 52 is installed on the metallic end wall 54 to close the opening 76 of the end wall 54, the lower surface 59 of lever portion 58 will be maintained in secure and sealing contact with the subjacent annular surface portion 61 of the end wall 54. As a result, the undesirable ingress of dirt and debris between the lever portion 58 and the surface portion 61 will be completely or substantially completely precluded. Activation of lever 58 down past its desired position is prohibited, by reason of the outermost portion of lever 58 coming into contact with surface portion 61. Thus, a tight seal of the closure element 52 onto end 54 is provided, as described above. The tight surface contact between the inner portion of lever 58 and surface 61 substantially reduces or eliminates the possibility of uncontrolled venting of the closure device 50, for example, when subjected to a downwardly directed axial load on center panel 56.

The connecting portion 60 of the flexible closure element 52 includes a nose portion 62 which differs from the nose portion of the previous embodiment in that the nose portion 62 completely occupies an annular recess on the exterior of neck 74 of the opening 76. This is effected by conforming the nose portion 62 with the radius of curvature of the exterior of the neck portion 74 during closing of the closure device 50. This occurs in spite of the fact that the nose 62 is molded with a radius of curvature slightly less than that of neck portion 74. It is believed that the displacement of nose 62 to its sealing position causes it to conform to the profile of neck 74. The connecting portion 60 also includes an annular recess 64 having the same radius of curvature as the bead 78 of the inwardly turned flange 80. With this arrangement, when the flexible closure element is disposed as illustrated in FIGURE 10 on the end 54 a fluid-tight seal is achieved on the flange 80.

The central panel 56 is formed with a frustoconical annular wall 66 extending in a smoothly continuous manner from the annular recess 64 to the inner surface 68 of the panel 56. Surface 68 extends substantially parallel to the exterior surface 70 of the central panel 56. With this arrangement, controlled venting can be achieved since the material of the panel 56 is spaced inwardly from the inner surface of the opening 76 and no contact with surface 77 is made when the closure device 50 is under pressure. Additionally, the relatively constant thickness of central panel 56 towards its periphery, as opposed to the tapering of the previous embodiment, resists upward bulging at central panel 56 when the closure device is positioned on a container under internal pressure. This helps prevent undesired venting of the closure device 50, should the closure device 50 be subjected to a downwardly directed force on central panel 56.

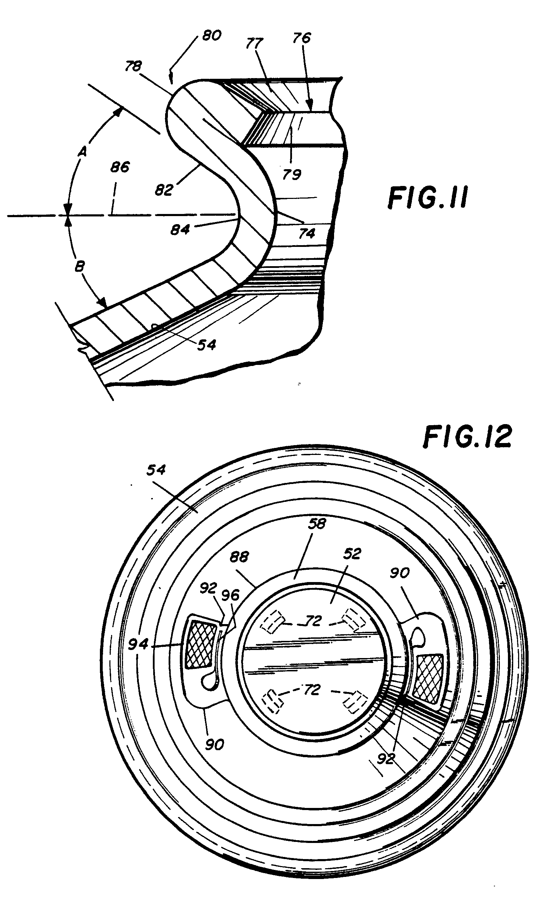

To assist in locating the flexible closure element 52 in the opening 76 of the end wall 54 a plurality of locating lugs 72 are formed to extend substantially perpendicularly relative to the outer surface 70 and are spaced slightly inwardly from the neck 74 of the opening 76 when the flexible closure element 52 is installed on the opening 76 of the end wall 54. The disposition of the locating lug 72 is shown in broken lines by way of example, in FIGURE 12.

With reference now to FIGURE 11, there is shown in greatly enlarged detail a sectional view of the flange 80 of the metallic end wall 54 with the flexible closure element 52 removed. The manner of forming flange 80 with metal forming tooling so that the flange will assume the shape illustrated in FIGURE 11 will be apparent to those skilled in this art. It is important, however, in a preferred embodiment, that certain relationships be observed.

Firstly, before the opening 76 is formed, the end wall is in the form of a single disc of metal which, after passing through a number of die forming steps is placed in condition to form the opening 76. Prior to forming the opening, the area in which the metal is removed to form the opening 76 is preferably subjected to a coining operation involving compressing the metal between dies whereby metal of region 77 adjacent the end face 79 will be stress relieved and reduced in thickness, as a result of the coining so as to become more resistant to fracturing during the subsequent forming steps. Further, it is important that the end surface 79 face inwardly relative to the neck 74 of the opening 76 whereby the exterior surface of the flange 80 such as at the curved surface 78, the flat annular surface 82 and the radial surface 84 will be smoothly surfaced.

Most importantly, it has been found that the angle A in Figure 11, the angle at which the smooth annular surface 82 extends upwardly from the plane surface indicated in the broken line at 86 should be between about 30° and about 40° and preferably about 35°. The plane indicated at 86 is that plane which passes through an annular region defined by the smallest diameter of the neck 74 in the opening 76. It has been found that where this angular relationship is maintained, the flexible closure element 52 of FIGURE 10 is retained in sealing engagement with the flange 80 at unexpectedly high pressures and, in some instances, the closure element 52 remains in place on the flange even after the metal of the container has failed due to excess pressure. Where the angle A is less than about 30°, it becomes difficult to remove the closure element 52 from metallic end 54. Where the angle A is greater than about 40°, and where the contents of the container are pressurized, the flexible closure element exhibits a tendency to slide over the flange 80. It will thus be seen that the angular range of about 30-40° and preferably about 35° is essential to successful retention of the flexible closure element 52 on the end wall 54.

It will be appreciated from Figure 11 that the upper end of the beaded flange 80 includes the rounded portion 78 which cooperates with the surface 64 of the closure element 52 in that the surfaces are of substantially complementary configuration in size, shape and curvature. As a result, when the closure element 52 is installed on the flange 80 of end wall 54, there will be substantially full and complete contact between the rounded surface 64 of the closure element 56 and the surface 78 of the flange 80 upon initial positioning of the closure element 52 over the opening 76 prior to inverting the lever portion 58 to the generally downwardly directed position as illustrated in Figure 10.

When the lever portion is inverted, the straight line surface 82 of the flange 80 immediately below the rounded portion 78 and the complementary straight line portion of the surface of the closure element immediately below the annular recess 64 are brought into contact without substantial sliding therebetween. Figure 11 also illustrates angle B, which is the angle of upwardly and inwardly directed wall 61. This angle B should range between about 25° and about 35°, and preferably is about 25°. If angle B exceeds about 35° stackability of the closure device 50 is impaired. If the angle B is less than about 25°, pourability through the metallic end 54 is impaired.

The combined angle formed by angles A and B will thus be seen to be in the range of about 55° to about 75° and preferably about 60°.

With reference now to Figure 12, there is shown a top plan view of the flexible closure element 52 of this embodiment. As illustrated, the outer periphery 88 of the lever portion 58 is provided with diametrically located pull tabs 90 which incorporate a tamper-evident feature in the form of a frangible connecting member 92 spanning the tip of the main body 94 of the pull tab 90 and a spaced portion 96 of the pull tab which is located on the periphery 88 of the lever portion 58 and is formed integrally therewith. Preferably, as shown, two spaced pull tabs 90 are provided although, it will be understood that in many applications a single pull tab could suffice.

With this tamper-evident feature, a user will be able to visually inspect the end wall 54 and, where the bridge 92 has been severed, this will indicate that the closure element has been tampered with.

It will be noted that unlike a purely mechanical hinge, the hinge about which the outer portion 58 is rotated in moving from the upwardly directed position similar to that of FIGURE 1 of the previous embodiment and the downwardly directed position as illustrated in FIGURE 10 will lie within the area of the connecting portion 60 and should be below the center of the radius of curvature of the surface portion 64 when the closure element 52 is viewed in a side elevation. With this arrangement, the nose 62, when the lever portion 58 is in the upwardly directed position, will be substantially if not completely out of contact with the outermost portion of the flange 80 when the closure element 52 is first installed on the flange 80. Thus, with relatively simple modifications, presently installed closure machines can be employed with the flexible closure element of the present invention.

As with the previous embodiment, the closure device of FIGURES 10-12 are capable of mechanical stacking as can be appreciated by considering the stacking arrangement exemplified in FIGURE 10 where the dotted line device is in one such stacked position.

While emphasis has been placed on closure devices for metallic cans, it should be noted that composite cans and other similar structures may also employ the closure device 1 of the present invention.

From the foregoing, it is clear that the present invention provides a resealable closure device which may be employed on standard can bodies and which overcomes the limitations and deficiencies of the previously known resealable closure devices for cans.

## Claims

1. A closure device for a container comprising: a container end wall (2, 54) having an opening therethrough surrounded by an upstanding flange (18, 80); and a flexible closure element (4, 52) having a central panel (30, 56) and a lever portion (32, 58) connected to said central panel by a connecting portion (36, 60), said lever portion having in vertical cross-section a nose (34, 62) at its junction with said connecting portion and being initially disposed in a first position as a frustoconical skirt which, when the closure element is positioned over the opening, is directed in a general sense away from the container, such that, upon moving said lever portion to a second position in which it extends in a generally opposite sense to the first position, said nose will engage an annular part of the exterior surface (20, 82-4) of said flange to retain the closure element sealingly over said opening, with said lever portion engaging a generally frustoconical annular portion (16, 61) of said end wall surrounding said opening; characterised in that said flange flares outwardly relative to said opening, and said nose extends continuously round said element and seals the container by engagement with the exterior surface of said flange, said closure element being out of contact with a sufficient portion of the inner surface (24, 77) of said flange to prevent said element forming a plug that seals against said inner surface.

2. A closure device according to claim 1, wherein said lever portion (58) has a smooth surfaced region (59) which intimately engages said substantially frustoconical annular portion (61) of said end wall (54) when said lever portion is moved to said second position so as to substantially prevent ingress of dirt and the like between said lever portion and said annular portion.

3. A closure device according to claim 1 or 2 wherein the angle (A + B) between said annular wall portion (61) and said exterior surface (82) portion of said flange (80) lies within the range of 55°-75°.

4. A closure device according to claim 3 wherein said selected angle is approximately 60° or 70°.

5. A closure device according to any of claims 1 to 4, wherein said exterior surface (82) of said flange extends at an angle (a) of between 30° and 40° to a plane (86) passing through the portion (74) of minimum diameter of said opening.

6. A closure device according to any of claims 1 to 5, wherein said central panel (56) includes substantially flat inner (68) and outer (70) surfaces extending substantially parallel to one another and being connected by a frustoconical wall (66) which extends substantially entirely around said central panel and slopes inwardly towards said inner surface away from said connecting portion (60) of said closure element.

7. A closure device according to claim 6, wherein said frustoconical wall (66) has abutments (72) at spaced intervals for engaging an inner surface of said flange (80).

8. A closure device according to any of claims 1 to 7 wherein said flange (80) includes a rounded portion (78) and said closure element (52) includes a surface (64) that is substantially complementary in size, shape and curvature to said rounded portion so that said rounded portion and surface are in substantially complete contact with each other upon initial positioning of said closure element over said opening.

9. A closure device according to claim 8 wherein, when viewed in vertical cross-section, the surface (82) of said flange (80) immediately below said rounded portion (78) is a straight line, and the surface of said closure element (52) immediately below said complementary portion (64) thereof is also a straight line, whereby movement of the lever portion (58) from its first to its second position brings the two straight line surfaces into contact without substantial sliding therebetween.

10. A closure device according to any of claims 1 to 9, wherein at least one pull tab is connected to the outer periphery of said lever portion.

11. A closure device according to any of claims 1 to 10, wherein said flexible closure element (4, 52) is formed from polypropylene or polyethylene.

12. A closure device according to any of claims 1 to 11, wherein said end (2, 54) is formed from an aluminum alloy.

13. A closure device according to any of claims 1 to 12 wherein surfaces of said end wall (2, 54) which contact the closure element (4, 52) include a coating thereon comprising a wax or lacquer.

14. A closure device according to any of claims 1 to 13 wherein said closure element (4, 52) is coated with a low gas transmission rate coating material.

15. A closure device according to claim 1, characterized in that said nose portion (34) sealingly contacts the exterior surface (20) of said flange (18) without mechanically hooking under said flange, while said connecting portion (36) sealingly contacts said flange in tangential contact between said central panel (30) and said flange.

## Patentansprüche

1. Verschlußvorrichtung für einen Behälter mit einer Behälterabschlußwand (2, 54), die eine von einem abstehenden Flansch (18, 80) umgebene Öffnung aufweist, mit einem flexiblen Verschlußelement (4, 52) mit einer zentralen Scheibe (30, 56) und einem Hebelabschnitt (32, 58), der mit der zentralen Scheibe über ein Verbindungsteil (36, 60) verbunden ist, wobei der Hebelabschnitt im vertikalen Querschnitt eine Nase (34, 62) an seinem Anschluß an das Verbindungsteil aufweist und ursprünglich in einer ersten Stellung wie ein kegelstumpfförmiger Schurz angeordnet ist, welcher dann, wenn das Verschlußelement über die Öffnung gesetzt ist, in genereller Richtung vom Behälter weg gerichtet ist, so daß beim Bewegen des Hebelabschnittes in eine zweite Stellung, in der er sich in generell entgegengesetzter Richtung zur ersten Stellung erstreckt, dessen Nase an einem ringförmigen Teil der äußeren Oberfläche (20, 82-4) des Flansches angreift, um das Verschlußelement abdichtend über der Offnung zu halten, wobei der Hebelabschnitt an einem allgemein kegelstumpfförmigen, die Öffnung umgebenden Ringteil (16, 61) der Abschlußwand anliegt, dadurch gekennzeichnet, daß der Flansch sich bezüglich der Öffnung nach außen erweitert und die Nase sich kontinuierlich rund um das (Verschluß-) Element erstreckt und den Behälter durch Anschmiegung an die äußere Oberfläche des Flansches abdichtet, wobei das Verschlußelement ohne Kontakt mit einem ausreichenden Teil der inneren Oberfläche (24, 77) des Flansches ist, um zu verhindern, daß das (Verschluß-) Element einen Stöpsel bildet, der gegen die innere Oberfläche abdichtet.

2. Verschlußvorrichtung nach Anspruch 1, dadurch gekennzeichnet, daß der Hebelabschnitt (58) einen glatten Oberflächenbereich (59) aufweist, der eng an dem im wesentlichen kegelstumpfförmigen Ringteil (61) der Abschlußwand (54) anliegt, wenn der Hebelabschnitt in seine zweite Stellung bewegt wird, um so im wesentlichen das Eindringen von Schmutz und dergleichen zwischen dem Hebelabschnitt und dem Ringteil zu verhindern.

3. Verschlußvorrichtung nach Anspruch 1 oder 2, dadurch gekennzeichnet, daß der Winkel (A + B) zwischen dem Ringteil (61) und der äußeren Oberfläche (82) des Flansches (80) innerhalb eines Bereiches von 55° und 75° liegt.

4. Verschlußvorrichtung nach Anspruch 3, dadurch gekennzeichnet, daß der ausgewählte Winkel annähernd 60° oder 70° beträgt.

5. Verschlußvorrichtung nach einem der Ansprüche 1 bis 4 dadurch gekennzeichnet, daß die äußere Oberfläche (82) des Flansches sich in einem Winkel (A) zwischen 30° und 40° zu einer Ebene (86) erstreckt, die durch den Teil (74) mit dem kleinsten Durchmesser der Öffnung geht.

6. Verschlußvorrichtung nach einem der Ansprüche 1 bis 5, dadurch gekennzeichnet, daß die zentrale Scheibe (56) im wesentlichen flache innere (68) und äußere (70) Oberflächen aufweist, die sich im wesentlichen parallel zueinander erstrecken und die durch eine kegelstumpfförmige Wand (66) verbunden sind, die sich im wesentlichen ganz um die zentrale Scheibe erstreckt und die vom Verbindungsteil (60) des Verschlußelements weg schräg einwärts zur inneren Oberfläche hin geneigt ist.

7. Verschlußvorrichtung nach Anspruch 6, dadurch gekennzeichnet, daß die kegelstumpfförmige Wand (66) in Abständen voneinander angeordnete Widerlager (72) aufweist, die mit der Innenfläche des Flansches (80) zusammenwirken.

8. Verschlußvorrichtung nach einem der Ansprüche 1 bis 7, dadurch gekennzeichnet, daß der Flansch (80) einen gerundeten Bereich (78) und das Verschlußelement (52) eine Oberfläche (64) enthält, die in Größe, Form und Krümmung im wesentlichen komplementär zu dem gerundeten Bereich ist, so daß der gerundete Bereich und die Oberfläche bei der anfänglichen Positionierung des Verschlußelements über der Öffnung im wesentlichen im vollständigen Kontakt miteinander stehen.

9. Verschlußvorrichtung nach Anspruch 8, dadurch gekennzeichnet, daß - in senkrechtem Querschnitt gesehen - die Oberfläche (82) des Flansches (80) unmittelbar unter dem gerundeten Bereich (78) eine gerade Linie und die Oberfläche des Verschlußelements (52) unmittelbar unter dem komplementären Bereich (64) ebenfalls eine gerade Linie ist, wobei die Bewegung des Hebelabschnittes (58) von seiner ersten in seine zweite Stellung die beiden geraden Linien in Berührung ohne wesentliches Gleiten zwischen ihnen bringt.

10. Verschlußvorrichtung nach einem der Ansprüche 1 bis 9, dadurch gekennzeichnet, daß wenigstens eine Zuglasche mit dem Außenumfang des Hebelabschnitts verbunden ist.

11. Verschlußvorrichtung nach einem der Ansprüche 1 bis 10, dadurch gekennzeichnet, daß das flexible Verschlußelement (4, 52) aus Polypropylen oder Polyethylen hergestellt ist.

12. Verschlußvorrichtung nach einem der Anspruch 1 bis 11, dadurch gekennzeichnet, daß die Abschlußwand aus einer Aluminium-Legierung hergestellt ist.

13. Verschlußvorrichtung nach einem der Ansprüche 1 bis 12, dadurch gekennzeichnet, daß die Oberflächen der Abschlußwand (2, 54), die das Verschlußelement (4, 52) berühren, einen Überzug aus Wachs oder Lack aufweisen.

14. Verschlußvorrichtung nach einem der Ansprüche 1 bis 13, dadurch gekennzeichnet, daß das Verschlußelement mit einem Überzugsmaterial mit geringem Gasdurchlässigkeitsvermögen überzogen ist.

15. Verschlußvorrichtung nach Anspruch 1, dadurch gekennzeichnet, daß die Nase (34) die Außenfläche (20) des Flansches (18) abdichtend berührt, ohne mechanisch unter den Flansch zu haken, während das Verbindungsteil (36) abdichtend in tangentialem Kontakt zwischen der zentralen Scheibe und dem Flansch steht.

## Revendications

1. Dispositif de fermeture pour un récipient comprenant: une paroi d'extrémité de récipient (2, 54) comprenant une ouverture traversante entourée par une bride dressée (18, 80); et un élément de fermeture flexible (4, 52) comprenant un panneau central (30, 56) et une portion de levier (32, 58) reliée audit panneau central par une portion de liaison (36, 60), ladite portion de levier présentant en section verticale un nez (34, 62) à sa jonction avec ladite portion de liaison et étant initialement disposée dans une première position sous forme d'une jupe tronconique qui, lorsque l'élément de fermeture est placé sur l'ouverture, est dirigée dans un sens s'éloignant de façon générale du récipient, de manière que lorsqu'on déplace ladite portion de levier vers une seconde position dans laquelle elle s'étend dans un sens généralement opposé à la première position, ledit nez vient en contact avec une partie annulaire de la surface extérieure (20, 82-4) de ladite bride pour retenir l'élément de fermeture de façon étanche sur ladite ouverture, ladite portion de levier venant en contact avec une portion annulaire généralement tronconique (16, 61) de la dite paroi d'extrémité entourant ladite ouverture; caractérisé en ce que ladite bride va en s'évasant vers l'extérieur par rapport à ladite ouverture, et ledit nez s'étend de façon continue autour dudit élément et ferme de façon étanche le récipient par contact avec la surface extérieure de ladite bride, ledit élément de fermeture étant hors de contact avec une portion suffisante de la surface interne (24, 77) de ladite bride pour éviter que ledit élément forme un bouchon qui vient se placer de façon étanche contre ladite surface interne.

2. Dispositif de fermeture selon la revendication 1, dans lequel ladite portion de levier (58) comprend une région à surface lisse (59) qui vient en contact intime avec ladite portion annulaire sensiblement tronconique (61) de ladite paroi d'extrémité (54) quand ladite portion de levier est déplacée vers ladite seconde position de manière à éviter sensiblement la pénétration de salissures et analogues entre ladite portion de levier et ladite portion annulaire.

3. Dispositif de fermeture selon la revendication 1 ou 2, dans lequel l'angle (A + B) entre ladite portion de paroi annulaire (61) et ladite portion de surface extérieure (82) de ladite bride (80) est située dans la plage de 55-75°.

4. Dispositif de fermeture selon la revendication 3, dans lequel ledit angle sélectionné est d'approximativement 60° à 70°.

5. Dispositif de fermeture selon l'une quelconque des revendications 1 à 4, dans lequel ladite surface extérieure (82) de ladite bride s'étend en formant un angle (A) compris entre 30° et 40° avec un plan (86) passant par la portion (74) de diamètre minimal de ladite ouverture.

6. Dispositif de fermeture selon l'une quelconque des revendications 1 à 5, dans lequel ledit panneau central (56) comprend des surfaces interne (68) et externe (70) sensiblement plates, s'étendant sensiblement parallèlement l'une par rapport à l'autre et étant reliées par une paroi tronconique (66) qui s'étend sensiblement sur la totalité autour dudit panneau central et forme une pente vers l'intérieur en direction de ladite surface interne en s'éloignant de ladite portion de liaison (60) dudit élément de fermeture.

7. Dispositif de fermeture selon la revendication 6, dans lequel ladite paroi tronconique (66) comprend des butées (72) à des intervalles espacés pour venir en contact avec une surface interne de ladite bride (80).

8. Dispositif de fermeture selon l'une quelconque des revendications 1 à 7, dans lequel ladite bride (80) comprend une portion arrondie (78) et ledit élément de fermeture (52) comprend une surface (64) qui est sensiblement complémentaire en dimensions, forme et courbure à ladite portion arrondie, de manière que ladite portion arrondie et la surface soient en contact sensiblement total l'un avec l'autre lors du positionnement initial dudit élément de fermeture sur ladite ouverture.

9. Dispositif de fermeture selon la revendication 8, dans lequel, lorsqu'on le regarde en coupe verticale, la surface (82) de ladite bride (80) située immédiatement au-dessous de ladite portion arrondie (78) est une ligne droite, et la surface dudit élément de fermeture (52) située immédiatement au-dessous de ladite portion complémentaire (64) de celui-ci est également une ligne droite, le mouvement de la portion de levier (58) depuis sa première position vers sa seconde position amenant les deux surfaces en ligne droite en contact sans glissement sensible entre elles.

10. Dispositif de fermeture selon l'une quelconque des revendications 1 à 9, dans lequel une patte de traction au moins est reliée à la périphérie externe de ladite portion de levier.

11. Dispositif de fermeture selon l'une quelconque des revendications 1 à 10, dans lequel ledit élément de fermeture flexible (4, 52) est formé en polypropylène ou en polyéthylène.

12. Dispositif de fermeture selon l'une quelconque des revendications 1 à 11, dans lequel ladite extrémité (2, 54) est formée en un alliage d'aluminium.

13. Dispositif de fermeture selon l'une quelconque des revendications 1 à 12, dans lequel les surfaces de ladite paroi d'extrémité (2, 54) qui sont en contact avec l'élément de fermeture (4, 52) comprennent un revêtement comportant une cire ou une laque.

14. Dispositif de fermeture selon l'une quelconque des revendications 1 à 13, dans lequel ledit élément de fermeture (4, 52) est revêtu d'un matériau de revêtement à faible taux de transmission des gaz.

15. Dispositif de fermeture selon la revendication 1, caractérisé en ce que ladite portion de nez (34) est en contact étanche avec la surface extérieure (20) de ladite bride (18) sans s'accrocher mécaniquement sous ladite bride, alors que ladite portion de liaison (36) établit un contact étanche avec ladite bride en contact tangentiel entre ledit panneau central (30) et ladite bride.

FIG.1

FIG.2

FIG.3

FIG.4

FIG.5

*4*

*36* *22A*

*30*

*18A*

*32*

*34*

*1A*

*24A*

*38*

*20A*

*2A*

FIG.7

*22*

*30*

*36*

*24*

*20*

*32*

*21*

*34*

*16*

FIG.6

*36* *22*

*30*

*32*

*20*

*24*

*38*

*34*

*10*

*44*

*46*

*42*

*6*

FIG. 8

FIG. 9

EP 0 140 686 B1

FIG.10

FIG.11

FIG.12